# EUROPÄISCHE PATENTSCHRIFT

(11) **EP 2 643 272 B1**
(45) Veröffentlichungstag und Bekanntmachung des Hinweises auf die Patenterteilung: **26.06.2019**
(21) Anmeldenummer: 11791213.9
(22) Anmeldetag: 21.11.2011
(51) Int. Cl.: B01D 39/16

(54) **LUFTFILTERMEDIUM MIT ZWEI WIRKUNGSMECHANISMEN**
AIR FILTER MEDIUM COMBINING TWO MECHANISMS OF ACTION
ÉLÉMENT DE FILTRAGE DE L'AIR COMPORTANT DEUX MÉCANISMES D'ACTION

(30) Priorität: 22.11.2010 DE 102010052155
(43) Veröffentlichungstag der Anmeldung: 02.10.2013
(73) Patentinhaber: Irema-Filter GmbH, 92353 Postbauer-Pavelsbach (DE)
(72) Erfinder: JUNG, Anke, 90480 Nürnberg (DE); SEEBERGER, Andreas, 90480 Nürnberg (DE)
(74) Vertreter: Wallinger, Michael
(86) Internationale Anmeldenummer: PCT/EP2011/005854
(87) Internationale Veröffentlichungsnummer: WO 2012/069172

(56) Entgegenhaltungen:
- US-A- 6 071 419
- US-A1- 2006 000 196

## Beschreibung

Die Erfindung betrifft ein Luftfiltermedium in Form eines schichtförmigen Vliesmaterials. Solche Filtermedien werden in Filtern, zum Beispiel in Raumluftfilter und Klimaanlagen, insbesondere aber in Luftfiltern für den Kraftfahrzeuginnenraum oder für Motoren eingesetzt.

Die Filtermedien werden in einem Schmelz-Spinn-Verfahren wie zum Beispiel einem Spunbond-Verfahren oder einem Melt-Blown-Verfahren hergestellt, wie dies im z.B. in der DE 41 23 122 A1 beschrieben ist.

Die Ansaugluft von Verbrennungskraftmaschinen zum Beispiel in Kraftfahrzeugen oder im Off-Highway-Bereich wird üblicherweise gefiltert, um den motorischen Verbrennungsraum vor einer mechanischen Beschädigung durch angesaugte Partikel aus der Umgebungsluft zu schützen. Ein wichtiges Kriterium beim Design der Filterelemente ist es, eine hohe Standzeit des Filters bei gleichzeitig hoher Abscheideleistung der angesaugten Partikel zu gewährleisten.

Kraftfahrzeuge weisen ein genau berechnetes Energieverteilungssystem auf. Dem Bereich Heizung/Lüftung/Klima stehen dabei nur begrenzte Energiemengen zur Verfügung. Auch die Kosten von Fahrzeugkomponenten dürfen sich nur in einem engen Rahmen bewegen. Anderseits werden von Automobilkäufern aber immer mehr Ansprüche an Komfort und Sicherheit gestellt. Unter diesen Gesichtspunkten sind Partikelfilter mit einem möglichst niedrigen Druckabfall bzw. Differenzdruck von besonderer Bedeutung, da von dem Lüftermotor nur ein niedriger Druck generiert werden muss und der Energieverbrauch somit gering ausfällt. Des Weiteren arbeitet dieser durch die geringere benötigte Leistung auch leiser, wodurch die Geräuschentwicklung verringert und somit der Fahrkomfort wesentlich erhöht wird.

Die Forderung nach Filtersystemen mit niedrigem Differenzdruck konkurriert mit der geforderten Abscheideleistung und der geforderten Standzeit, also der Zeit ausgedrückt in Kilometerlaufleistung, die ein Filter im Fahrzeug verbleiben kann, bis er ausgetauscht werden muss.

Beispielsweise genügen für den Fahrzeuginnenraum Pollenfilter, die nur Pollen aus der einströmenden Luft im Fahrzeug filtern, nicht. Die Allergene, auf die das Immunsystem von Allergikern reagiert, sind Proteine, deren Durchmesser nur einen Bruchteil des Pollendurchmessers beträgt. Sie liegen im Größenbereich um 0,1 µm, das heißt dem Bereich, der für Partikelfilter die größten Probleme aufweist, dem sogenannten MPPS (Most penetrating particle size). Dementsprechend sollte die Abscheideleistung in diesem Größenbereich mindestens 50% betragen, wobei diese mittels eines Aerosols gemessen wird, dessen Partikel in etwa die gleiche Dichte aufweisen, zum Beispiel NaCl. Gleichzeitig sollen mit derartigen Filtern beim Einbau in Kraftfahrzeugen Standzeiten von mindestens 30 000 Kilometern erreicht werden.

Die EP 1 198 279 B1 offenbart ein Meltblown-Vliesgebilde, welches aus mindestens zwei Schichten besteht, wobei eine Schicht aus Mikrofasern besteht während die andere Schicht aus Makrofasern besteht. Die Schichten werden dabei aufeinander abgelagert und haften aneinander durch Verbindungen zwischen den Fasern. Werden Vliesgebilde dieser Art jedoch im Bereich der Luftfiltration eingesetzt, so setzten diese sich aufgrund der in der Luft vorhandenen Partikel sehr schnell zu. Dabei wird grundsätzlich zwischen zwei Filterarten bzw. Filterprozessen unterschieden.

Oberflächenfilter weisen ein relativ glattes, dichtes Filtermedium auf, welches dazu führt, dass sich an der Oberfläche des Filtermediums anströmseitig ein Filterkuchen aufbaut, der innerhalb von kurzer Zeit die Filterwirkung unterstützt. Der Druckverlust, d.h. der Differenzdruck, über das Filtermedium steigt jedoch schnell an. Wird ein kritischer Wert erreicht, wird üblicherweise ein Luftrückstoß in die Gegenrichtung der normalen Luft-Fließrichtung auf das Medium abgegeben (reverse pulse), so dass der Filterkuchen vom Medium weitgehend (bis auf einen kleinen Rest) abfällt und das Filtermedium quasi regeneriert ist. Die Pulse sind oft wiederholbar, mit der Zeit nimmt aber die Effizienz der Regeneration ab, so dass der Filter ausgetauscht werden muss.

Tiefenfilter weisen eher offenporiges Fasermaterial auf, dass die Schmutzpartikel über die gesamte Tiefe des Mediums aufnimmt. Oft ist dieses dreidimensional aufgebaut, d.h. anströmseitig sind grobe, abströmseitig feine Faserdurchmesser zu finden. Die Schmutzpartikel gelangen in das Medium und werden vor der Feinfaserschicht aufgehalten und eingelagert. Der Druckverlust dieses Filtermediums steigt nur langsam an. Jedoch ist eine Abreinigung nicht möglich, da die Schmutzpartikel fest in dem offenporigen Fasermaterial eingelagert sind.

Somit entsteht ein Zwiespalt zwischen zwei Effekten: Entweder wählt man einen Filter, der innerhalb einer kurzen Zeit einen hohen Differenzdruck aufbaut und daher oft abgereinigt werden muss (Oberflächenfilter), oder einen Filter, der zwar mehr Partikel aufnehmen kann, bevor der Differenzdruck einen kritischen Wert erreicht, dafür aber nicht abgereinigt werden kann (Tiefenfilter).

Die US 6 071 419 betrifft einen Fluidfilter mit einer ersten Schicht mit Perforationen aus einer stabilisierten, nicht gewebten Watte und einer zweiten Watteschicht. Die erste Schicht ist dabei auf der zweiten Schicht angeordnet. Das zu filternde Fluid durchströmt beide Schichten, wobei an den horizontalen Flächen des Filters sich die gefilterten Partikel absetzen. Die vertikalen Flächen der Oberfläche des Filters bleiben im Wesentlichen frei.

Die US 2006/0000196 A1 betrifft einen Fluidfilter, welcher abwechselnde Zonen von höherem und niedrigerem Fluidfließwiderstand aufweist. Durch die unterschiedlichen Durchflusswiderstände in verschiedenen Bereichen des Filtermediums setzen sich zu filternde Partikel im Bereich mit einem höheren Durchflusswiderstand ab, da dort der Luftstrom gegenüber den anderen Bereichen sehr langsam ist oder sogar zum Erliegen kommt.

Die Aufgabe der vorliegenden Erfindung ist es, diese Nachteile zu überwinden und ein leicht herstellbares und kostengünstiges Luftfiltermedium bereitzustellen.

Diese Aufgabe wird durch ein Luftfiltermedium nach Anspruch 1, einen Luftfilter nach Anspruch 10, ein Verfahren zur Herstellung eines Luftfiltermediums nach Anspruch 12 und einem Verfahren zu Filterung von Luft nach Anspruch 13 gelöst. Vorteilhafte Ausgestaltungen werden in den abhängigen Ansprüchen beansprucht.

Luftfiltermedium im Sinne der Erfindung ist jede Art von Material, welches sich zur Reinigung von Luft eignet.

Ein Schmelz-Spinn-Verfahren im Sinne der Erfindung ist jedes Verfahren, bei welchem ein Vlies aus Ausgangsstoffen durch Ablage der bearbeiteten Ausgangsstoffe auf einem Substrat entsteht. Die Ausgangsstoffe werden hierbei insbesondere durch Aussprühen aus Düsen im geschmolzenen Zustand bearbeitet.

Regenerierbar in Sinne der Erfindung bedeutet, dass ein Filtermedium durch einen Arbeitsschritt zumindest teilweise gereinigt werden kann und idealerweise wieder in den Ausgangszustand versetzt wird. Dies kann beispielsweise durch einen Luftrückstoß, ein Absaugen, ein Abbrennen und/oder ein mechanisches Ausklopfen erreicht werden. Insbesondere werden hierbei gefilterte Partikel von dem Filtermedium entfernt oder so verschoben, dass der Luftwiderstrand des Filtermediums abnimmt.

Offenporig im Sinne der Erfindung bedeutet, dass das Filtermedium Poren aufweist, die nicht geschlossen sind, das heißt, bei dem die Kammern, welche durch Poren gebildet werden in Verbindung stehen.

Die Dicke im Sinne der Erfindung wird senkrecht zur Oberfläche des Filtermaterials bestimmt.

In Richtung des zu filternden Luftstroms im Sinne der Erfindung bedeutet in Richtung von der Anströmseite zu der Abströmseite des Filtermediums.

Differenzdruck im Sinne der Erfindung ist die Druckabnahme eines Luftstroms beim durchströmen eines Filters bzw. Filtermediums.

Durch die Kombination eines Tiefenfilterbestandteils mit einem Oberflächenfilterbestandteil weist das Filtermedium einerseits eine hohe Aufnahmekapazität für Partikel auf, welche in dem Tiefenfilteranteil eingelagert werden, andererseits kann der Oberflächenfilteranteil regeneriert werden. Somit wird ein Filtermedium bereitgestellt, welches eine lange Standzeit, d.h. ein möglichst langsames anwachsen des Differenzdrucks, gewährleistet und gleichzeitig die Möglichkeit der zumindest teilweisen Regeneration des Filtermediums schafft. Dadurch wird die Standzeit gegenüber einem reinen Tiefenfilter wesentlich verlängert sowie die Zeitintervalle zwischen notwendigen Regenerationen durch Luftrückstöße gegenüber einem reinen Oberflächenfilter ausgedehnt.

Weiterhin wird jederzeit eine hohe Abscheideleistung gewährleistet und die Herstellung des Luftfiltermaterials ist kostengünstig, da dieses in einem Arbeitsprozess hergestellt werden kann.

Das Luftfiltermedium weist eine, vorzugsweise regelmäßige, dreidimensionale Makrostruktur auf, welche bevorzugt aus vier- oder sechsseitigen Pyramiden, Kegeln, Wölbungen, Wellungen oder Ritzen besteht.

Eine dreidimensionale Makrostruktur im Sinne der Erfindung ist jede Art von Struktur, die sich auf der Oberfläche des Filtermediums befindet. Makrostruktur im Sinne der Erfindung ist eine Struktur, welche visuell ohne Hilfsmitte und/oder zumindest taktil wahrnehmbar ist.

Durch die Makrostruktur wird insbesondere die Koexistenz von Tiefenfilterbestandteil und Oberflächenfilterbestandteil an der anströmseitigen Oberfläche des Luftfiltermaterials verwirklicht. So können die Teile der Makrostruktur des Filters den Tiefenfilterbestandteil bilden, während zwischen der Makrostruktur der Oberflächenfilterbestandteil angeordnet ist.

Bevorzugt ist die Makrostruktur dabei anströmseitig auf dem Filtermedium angebracht.

Durch die Makrostruktur an der Anströmseite des Filtermediums wird die Anströmfläche des Filtermediums wird die Anströmfläche des Filtermediums vergrößert.

Je nach Höhe bzw. Dicke der Makrostrukturen des Filtermediums lässt sich die Anströmfläche hierbei bis auf ein Vielfaches der Anströmfläche eines im Wesentlichen ebenen Materials vergrößern.

Die Vergrößerung der Anströmfläche bewirkt eine Verringerung des Druckverlustes bzw. des Differenzdrucks des durchströmenden Luftstroms bzw. eine Verringerung des Luftwiderstandes des Filtermediums und/oder des fertigen Filters.

Der Tiefenfilterbestandteil ist auf dem Oberflächenfilterbestandteil, welcher eine durchgehende Schicht bildet, angeordnet.

Eine durchgehende Schicht im Sinne der Erfindung erstreckt sich über die gesamte Fläche des Filtermediums.

Durch diese Anordnung wird gewährleistet, dass der Faserdurchmesser des Oberflächenfilterbestandteils über die gesamte Fläche des Filtermediums auf keinen Fall unterschritten wird.

In einer weiteren bevorzugten Ausführungsform macht der Tiefenfilterbestandteil 50 bis 90%, bevorzugt 50 bis 70%, noch bevorzugter 70 bis 90% der Oberfläche des Vlieses aus.

Durch die relativ große Fläche des Tiefenfilterbestandteils weist das Filtermedium eine große Aufnahmekapazität für Partikel auf, so dass eine hohe Standzeit vor einer notwendigen Regeneration bzw. einem Austausch des Filtermediums erreicht wird.

Ausführungsbeispiele der Erfindung werden nun anhand von Zeichnungen näher beschrieben.
Fig. 1 zeigt einen Querschnitt einer ersten Ausführungsform des erfindungsgemäßen Filtermediums.
Fig. 2 stellt die Ablagerung von Partikeln bei einem Filtermedium gemäß der ersten Ausführungsform dar.
Fig. 3 stellt das regenerierte Filtermedium nach einem Luftrückstoss dar.
Fig. 4 zeigt einen Querschnitt durch eine zweite Ausführungsform des erfindungsgemäßen Filtermediums.
Fig. 5 zeigt einen Querschnitt durch eine dritte Ausführungsform des erfindungsgemäßen Filtermediums.

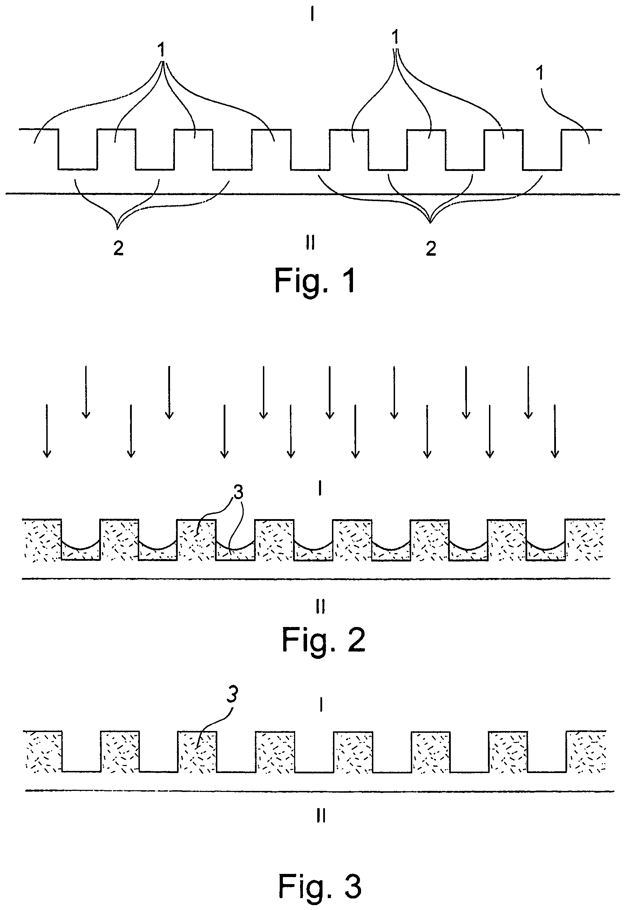

Wie in Fig. 1 ersichtlich wird das erfindungsgemäße Filtermedium aus zwei Bestandteilen gebildet. Dabei sind Tiefenfilterbestandteile 1 abwechselnd mit Oberflächenfilterbestandteilen 2 angeordnet. Der Tiefenfilterbestandteil 1 weist dabei zumindest anströmseitig I, d.h. auf jener Seite, auf welcher der zu filternde Luftstrom ankommt, Makrostrukturen auf. Diese Makrostrukturen können jede dreidimensionale Form einnehmen, welche zur Verbesserung der Filterleistung beiträgt. Der Tiefenfilterbestandteil 1 zeichnet sich weiterhin dadurch aus, dass seine Faserdurchmesser über seinen Querschnitt variieren. So sind anströmseitig I grobe, abströmseitig II feine Faserdurchmesser angeordnet. Der Oberflächenfilterbestandteil 2 des Filters befindet sich in den Zwischenräumen der Makrostrukturen des Tiefenfilterbestandteils 1 und weist überwiegend eine solche Faserstruktur auf, dass keine Partikel in ihn eindringen.

Wie in Fig. 2 dargestellt werden Partikel, welche sich in dem zu filternden Luftstrom, dessen Luft-Fließrichtung in normalem Betrieb durch Pfeile angedeutet ist, befinden, durch zwei Mechanismen gefiltert:
Zum einen dringen zu filternde Partikel 3 anströmseitig in den Tiefenfilterbestandteil 1 ein und lagern sich darin ab. Durch die Variation der Faserdurchmesser in Luft-Fließrichtung ergibt sich, dass zunächst grobe Partikel 3 gefiltert werden, wohingegen feinere Partikel 3 weiter ins Innere des Filters eindringen.

Zum anderen lagern sich zu filternde Partikel 3 auf dem Oberflächenfilterbestandteil 2 ab. Die Partikel 3 dringen bei diesem nicht oder nur geringfügig in das Luftfiltermedium ein und werden daher auf der Oberfläche als Filterkuchen angelagert, wie dies in Fig. 2 dargestellt ist.

Während des Luftfiltervorgangs wird zunächst der weiter anströmseitig I liegende Oberflächenfilterbereich 2 eines Filters, welcher aus dem erfindungsgemäßen Filtermedium besteht, mit Partikeln 3 zugesetzt, bevor sich der Tiefenfilterbestandteil 1 mit Partikeln 3 füllt.

Somit kann der Filter bei einer Zunahme des Differenzdrucks aufgrund des Zusetzens des Oberflächenfilterbestandteil 2 weiter betrieben werden, wobei die Filterwirkung dann größtenteils über den Tiefenfilterbestandteil 1 geschieht. Dieser weist eine wesentlich höhere Aufnahmekapazität für Partikel 3 auf als der Oberflächenfilterbestandteil 2, da die Partikel 3 in der dreidimensionalen Struktur einlagerbar sind.

Der Benutzer hat dann die Möglichkeit, den Oberflächenfilterbestandteil 2 mittels eines Luftrückstoßes, bei welchem Luft in Gegenrichtung der normalen Luft-Fließrichtung des zu filternden Luftstroms geblasen wird, und/oder mittels Absaugens der Partikel 3 von der Oberfläche des Luftfiltermediums zu regenerieren.

Fig. 3 stellt ein auf diese Weise regeneriertes Luftfiltermedium dar. Die Filterkuchen auf dem Oberflächenfilterbestandteil 2 sind entfernt und es verbleiben nur noch die in den Makrostrukturen des Tiefenfilterbestandteils 1 eingelagerten Partikel 3 im Filter.

Durch diese Regeneration können von dem Luftfiltermedium erneut große Mengen an Partikeln 3 aufgenommen werden. Dieser Vorgang kann so oft wiederholt werden, bis der Tiefenfilterbestandteil 1 vollständig mit Partikeln 3 zugesetzt ist und die Druckdifferenz aufgrund der verringerten Filterfläche deutlich zunimmt. Allerdings kann selbst in diesem Fall der Filter mit dem erfindungsgemäßen Luftfiltermedium übergangsweise über den Oberflächenfilterbestandteil 2 weiter betrieben werden.

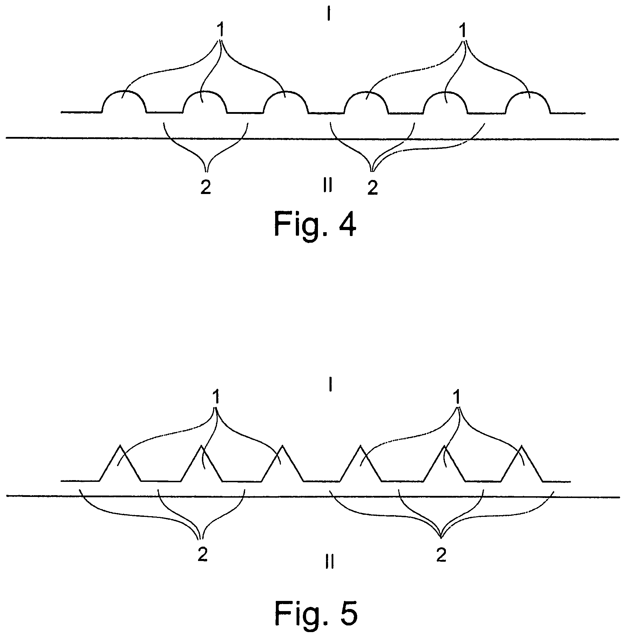

Die Figuren 4 und 5 zeigen alternative Ausführungsformen der vorliegenden Erfindung. Diese unterscheiden sich von der ersten Ausführungsform durch die andere Formgebung der Makrostrukturen. Bei allen Ausführungsformen können die Makrostrukturen sowohl als vereinzelte Strukturen auf dem Luftfiltermedium angeordnet sein oder eine regelmäßige Makrostruktur bilden. Die Makrostrukturen können dabei als Reihen gebildet werden oder schachbrettartig bzw. wabenartig angeordnet sein. Verschiedenste Formen wie mehrseitige, zum Beispiel vier- oder sechsseitige, Pyramiden, Kegel, Wölbungen, Wellungen oder Ritzen sind je nach Anwendung möglich. Zusätzlich können die Makrostrukturen als Abstandhalter zu einer weiteren Lage des Luftfiltermediums dienen.

Alternativ zu den abwechselnd angeordneten Oberflächenfilter- 2 und Tiefenfilterbestandteilen 1 könnte der Tiefenfilterbestandteil 1 auch anströmseitig I auf dem Oberflächenfilterbestandteil 2 angeordnet sein.

Selbstverständliche kann sowohl der Tiefenfilterbestandteil 1 als auch der Oberflächenfilterbereich 2 aus einer oder mehrerer Schichten bestehen, die vorwiegend jeweils verschiedene Faserdurchmesser aufweisen.

Das erfindungsgemäße Luftfiltermedium wird im in einem Schmelz-Spinn-Verfahren wie zum Beispiel einem Spunbond-Verfahren oder einem Melt-Blown-Verfahren hergestellt, wobei der Tiefenfilterbereich 1 mit den Makrostrukturen durch Tiefziehen des Vlieses während des Produktionsprozesses entsteht. Eine separate Bearbeitung des Vlieses ist hierzu nicht notwendig.

## Patentansprüche

1. Luftfiltermedium aus Vlies,
welches in einem Schmelz-Spin-Verfahren hergestellt wird und einen Tiefenfilterbestandteil (1), dessen Fasern in Mehrzahl einen Faserdurchmesser zwischen 15µm und 30µm aufweisen, einen Oberflächenfilterbestandteil (2), dessen Fasern in Mehrzahl einen Faserdurchmesser von weniger als 15µm aufweisen, und eine dreidimensionale Makrostruktur, die aus dem Tiefenfilterbestandteil (1) besteht, aufweist, wobei der Tiefenfilterbestandteil (1) auf dem Oberflächenfilterbestandteil (2), welcher eine durchgehende Schicht bildet, angeordnet ist, so dass eine Oberfläche zwischen der Makrostruktur von dem Oberflächenfilterbestandteil gebildet wird.

2. Luftfiltermedium nach Anspruch 1, wobei die Dicke des Oberflächenfilterbestandteils (2) geringer ist als die Dicke des Tiefenfilterbestandteils (1).

3. Luftfiltermedium nach einem der vorhergehenden Ansprüche, wobei der Oberflächenfilterbestandteil (2) im Wesentlichen 0,1 mm bis 1 mm und der Tiefenfilterbestandteil (1) im Wesentlichen 1 mm bis 8 mm dick ist.

4. Luftfiltermedium nach einem der vorhergehenden Ansprüche, wobei der Tiefenfilterbestandteil (1) aus tiefgezogenem Vlies besteht.

5. Luftfiltermedium nach einem der vorhergehenden Ansprüche, wobei die dreidimensionale Makrostruktur aus vier- oder sechsseitigen Pyramiden, Kegeln, Wölbungen, Wellungen oder Ritzen besteht.

6. Luftfiltermedium nach einem der vorhergehenden Ansprüche, wobei die Mehrzahl der Fasern des Oberflächenfilterbestandteils (2) bevorzugt einen Faserdurchmesser zwischen 0,1 µm und 10 µm und noch bevorzugter zwischen 0,5 µm und 8 µm aufweisen und die Mehrzahl der Fasern des Tiefenfilterbestandteils (1) bevorzugt Faserdurchmesser zwischen 20 µm und 30 µm aufweisen.

7. Luftfiltermedium nach Anspruch 6, wobei der Faserdurchmesser des Oberflächenfilterbestandteils (2) und/oder des Tiefenfilterbestandteils (1) in Richtung des zu filternden Luftstroms abnimmt.

8. Luftfiltermedium nach einem der vorhergehenden Ansprüche, wobei die Luftdurchlässigkeit 200 bis 3500l/m²·s, bevorzugt 800 bis 2000l/m²·s bei einem Differenzdruck von 200Pa beträgt.

9. Luftfiltermedium nach einem der vorhergehenden Ansprüche, wobei der Tiefenfilterbestandteil (1) 50% bis 90%, bevorzugt 50% bis 70%, noch bevorzugter 70% bis 90% der Oberfläche des Vlieses ausmacht.

10. Luftfilter mit einem Luftfiltermedium nach einem der Ansprüche 1 bis 9.

11. Luftfilter nach Anspruch 10, wobei die Makrostruktur anströmseitig (I) angeordnet ist.

12. Verfahren zur Herstellung eines Luftfiltermediums nach einem der Ansprüche 1 bis 9, wobei das Vlies in einem Schmelz-Spinnverfahren hergestellt wird und der Tiefenfilterbestandteil (1) mit der Makrostruktur durch Tiefziehen des Vlieses während des Produktionsprozesses entsteht

13. Verfahren zur Filterung von Luft mit einem Luftfilter nach Anspruch 10 oder 11, wobei das Verfahren folgende Arbeitsschritte aufweist:
- Bereitstellen des Luftfilters;
- Durchströmen des Filters mit zu filternder Luft, wobei die Makrostruktur anströmseitig (I) angeordnet ist; und
- Regenerieren des Luftfilters.

14. Verfahren nach Anspruch 13, wobei der Arbeitsschritt des Regenerierens durch Entfernen oder Verschieben von gefilterten Partikeln von dem Filtermedium des Luftfilters erfolgt.

15. Verfahren nach Anspruch 13 oder 14, wobei der Arbeitsschritt des Regenerierens einen Luftrückstoß in Gegenrichtung der normalen Luft-Fließrichtung, ein Absaugen, ein Abbrennen und/oder ein mechanisches Ausklopfen aufweist.

## Claims

1. An air filter medium made of a non-woven material,
which is produced in a melt spinning process and which comprises a depth filter constituent (1), the majority of the fibers of which have a fiber diameter between 15 µm and 30 µm, a surface filter constituent (2), the majority of the fibers of which have a fiber diameter of less than 15 µm, and a three-dimensional macrostructure which consists of the depth filter constituent (1), wherein the depth filter constituent (1) is disposed on the surface filter constituent (2), which forms a continuous layer so that a surface between said macrostructure is formed by the surface filter constituent.

2. The air filter medium according to claim 1, wherein the thickness of the surface filter constituent (2) is less than the thickness of the depth filter constituent (1).

3. The air filter medium according to any one of the preceding claims, wherein the surface filter constituent (2) is substantially 0.1 mm to 1 mm thick and the depth filter constituent (1) is substantially 1 mm to 8 mm thick.

4. The air filter medium according to any one of the preceding claims, wherein the depth filter constituent (1) consists of deep-drawn nonwoven material.

5. The air filter medium according to any one of the preceding claims, wherein the three-dimensional macrostructure consists of four-sided or six-sided pyramids, cones, curved portions, corrugations or scores.

6. The air filter medium according to any one of the preceding claims, wherein the majority of fibers of the surface filter constituent (2) preferably have a fiber diameter between 0.1 µm and 10 µm and even more preferably between 0.5 µm and 8 µm, and the majority of fibers of the depth filter constituent (1) preferably have fiber diameters between 20 µm and 30 µm.

7. The air filter medium according to claim 6, wherein the fiber diameter of the surface filter constituent (2) and / or of the depth filter constituent (1) decreases in the direction of the air flow to be filtered.

8. The air filter medium according to any one of the preceding claims, wherein the air permeability is 200 to 3500 I / m²∗s, preferably 800 to 2000 I / m²∗s, at a differential pressure of 200 Pa.

9. The air filter medium according to any one of the preceding claims, wherein the depth filter constituent (1) makes up 50% to 90%, preferably 50% to 70%, and even more preferably 70% to 90% of the surface area of the non-woven material.

10. An air filter with an air filter medium according to any one of the claims 1 to 9.

11. The air filter according to claim 10, wherein the macrostructure is arranged on the upstream side (I).

12. A method of producing an air filter medium according to any one of the claims 1 to 9, wherein the non-woven material is produced in a melt spinning process and the depth filter constituent (1) with the macrostructure is formed by deep-drawing the non-woven material during the production process.

13. A method of filtering air using an air filter according to claim 10 or 11, wherein the method comprises the following process steps:
- providing the air filter;
- causing air to be filtered to flow through the filter, wherein the macrostructure is arranged on the upstream side (I); and
- regenerating the air filter.

14. The method according to claim 13, wherein the process step of regenerating is carried out by removing or displacing filtered particles from the filter medium of the air filter.

15. The method according to claim 13 or 14, wherein the process step of regenerating comprises performing a reverse pulse of air in the direction opposite to the normal air flow direction, a suction, a burning off and / or a mechanical impulse.

## Revendications

1. Milieu de filtrage de l'air composé de non-tissé,
qui est fabriqué lors d'un procédé de filage par fusion et présente un constituant de filtre en profondeur (1), dont les fibres présentent en majorité un diamètre de fibre entre 15 µm et 30 µm, un constituant de filtrage de surface (2), dont les fibres présentent en majorité un diamètre de fibre inférieur à 15 µm, et une macrostructure tridimensionnelle, qui est constituée du constituant de filtre en profondeur (1), le constituant de filtre en profondeur (1) étant disposé sur le constituant de filtre de surface (2), lequel forme une couche continue, de sorte qu'une surface entre la macrostructure est formée par le constituant de filtre de surface.

2. Milieu de filtrage de l'air selon la revendication 1, dans lequel l'épaisseur du constituant de filtre de surface (2) est inférieure à l'épaisseur du constituant de filtre en profondeur (1).

3. Milieu de filtrage d'air selon l'une quelconque des revendications précédentes, dans lequel le constituant de filtre de surface (2) présente une épaisseur sensiblement de 0,1 mm à 1 mm, et le constituant de filtre en profondeur (1) présente une épaisseur sensiblement de 1 mm à 8 mm.

4. Milieu de filtrage d'air selon l'une quelconque des revendications précédentes, dans lequel le constituant de filtre en profondeur (1) est constitué d'un non-tissé produit par emboutissage profond.

5. Milieu de filtrage d'air selon l'une quelconque des revendications précédentes, dans lequel la macrostructure tridimensionnelle est constituée de pyramides à quatre ou six côtés, de cônes, de bombements, d'ondulations ou de fentes.

6. Milieu de filtrage d'air selon l'une quelconque des revendications précédentes, dans lequel la multitude de fibres du constituant de filtre de surface (2) présentent de manière préférée un diamètre de fibre entre 0,1 µm et 10 µm et de manière encore plus préférée entre 0,5 µm et 8 µm et la multitude des fibres du constituant de filtre en profondeur (1) présentent de manière préférée des diamètres de fibre entre 20 µm et 30 µm.

7. Milieu de filtrage d'air selon la revendication 6, dans lequel le diamètre de fibre du constituant de filtre de surface (2) et/ou du constituant de filtre en profondeur (1) diminue en direction du flux d'air à filtrer.

8. Milieu de filtrage d'air selon l'une quelconque des revendications précédentes, dans lequel la perméabilité de l'air va de 200 à 3500m/m².s, de manière préférée de 800 à 2000l/m².s pour une pression différentielle de 200 Pa.

9. Milieu de filtrage d'air selon l'une quelconque des revendications précédentes, dans lequel le constituant de filtre en profondeur (1) représente 50 % à 90 %, de manière préférée 50 % à 70 %, de manière encore plus préférée 70 % à 90 % de la surface du non-tissé.

10. Filtre à air avec un milieu de filtrage d'air selon l'une quelconque des revendications 1 à 9.

11. Filtre à air selon la revendication 10, dans lequel la macrostructure est disposée côté flux entrant (I).

12. Procédé servant à fabriquer un milieu de filtrage d'air selon l'une quelconque des revendications 1 à 9, dans lequel le non-tissé est fabriqué dans un procédé de filage par fusion et le constituant de filtre en profondeur (1) apparaît avec la macrostructure par emboutissage profond du non-tissé au cours du processus de production.

13. Procédé servant à filtrer de l'air avec un filtre à air selon la revendication 10 ou 11, dans lequel le procédé présente des étapes de travail suivantes :
- de fourniture du filtre à air ;
- de traversée du filtre par de l'air à filtrer, dans lequel la macrostructure est disposée côté flux entrant (I) ; et
- de régénération du filtre à air.

14. Procédé selon la revendication 13, dans lequel l'étape de travail de la régénération est effectuée par suppression ou déplacement de particules filtrées du milieu de filtrage du filtre à air.

15. Procédé selon la revendication 13 ou 14, dans lequel l'étape de travail de la régénération présente un retour de l'air dans le sens opposé au sens d'écoulement de l'air normal, une évacuation par aspiration, une calcination et/ou un tapotage mécanique.
